# EUROPEAN PATENT APPLICATION

(11) **EP 4 741 215 A1**
(43) Date of publication of application: **13.05.2026**
(21) Application number: 24211344.7
(22) Date of filing: 07.11.2024
(51) Int. Cl.: B60L 53/30, B60L 53/80

(54) **BATTERY SWAP MODULE AND BATTERY SWAP STATION AND METHOD**

(71) Applicant: Nio Technology (Anhui) Co., Ltd, Hefei City, Anhui 230601 (CN)
(72) Inventor: WANG, Yong, Munich (DE); LYU, Shuxiu, Munich (DE); LUO, Jun, Berlin (DE); YIN, Hang, Berlin (DE)
(74) Representative: Vossius & Partner Patentanwälte Rechtsanwälte mbB

(57) **Abstract**

The invention relates to a battery swap module (102) for a battery swap station (100) for electric vehicles (106). The battery swap module (102) comprises a battery compartment (108) configured to store at least one battery, the at least one battery being configured to be installed in an electric vehicle (106) and a battery transportation device (110). The battery swap module is configured to operate in a battery swap mode and a maintenance mode. In the battery swap mode, the battery compartment (108) is configured to be arranged in a space (114) provided vertically below a battery swap level (104), so that the battery compartment (108) is located vertically below an electric vehicle (106) provided on the battery swap level (104). In the battery swap mode, the battery transportation device (110) is configured to dismount at least one discharged battery from an electric vehicle (106) located on the battery swap level (104), transport the at least one discharged battery from the electric vehicle (106) to the battery compartment (108), to transport at least one charged battery from the battery compartment (108) to the electric vehicle (106), and to mount the at least one charged battery to the electric vehicle (106). In the maintenance mode, the battery compartment (108) is configured to be lifted vertically above the battery swap level (104) by a lifting device (112).

## Description

### FIELD OF THE INVENTION

The present invention generally relates to providing electric vehicles with a charged battery, in particular a battery swap module, a battery swap station, and a method of operating a battery swap station.

### BACKGROUND OF THE INVENTION

Since the process of recharging a battery of an electric vehicle may be time consuming, there exist facilities to replace the depleted battery of an electric vehicle by a charged battery, so-called battery swap stations or power swap stations. In such battery swap stations, the depleted battery can be replaced by a charged battery within a few minutes, so that the process of providing the electric vehicle with a charged battery is not as time consuming as a charging operation.

However, such battery swap stations may take up more space than charging stations, may have a visual and aesthetic impact on urban landscapes, may be exposed to weather conditions, temperature and environmental factors, and may be more susceptible to security issues or vandalism. Furthermore, there may be building regulations that prevent or impede the installation of battery swap stations. Moreover, battery swap stations may emit noise, which may impede the installation of power swap stations in certain areas.

### SUMMARY OF THE INVENTION

It is an object of the invention to solve all or at least some of the above-mentioned challenges. In particular, it may be an object of the invention to provide a battery swap station which is less prone to weather conditions, ambient temperature and other environmental factors. A further object may be to provide a battery swap station that may comply with stricter building regulations. A further object may be to provide a battery swap station with reduced noise emission.

These and further objects are solved by the invention defined in the independent claim. Further embodiments of the invention are set out in the dependent claims, the description and the drawings.

In the context of the present document, the expressions "up", "down", "vertically above" and "vertically below", and the like refer to directions and/or positions defined by the gravitational force. As such, the downward direction is generally parallel to and into the direction of the gravitational force. An upward direction therefore is generally parallel to and against the direction of the gravitational force.

The invention provides a battery swap module for a battery swap station for electric vehicles. The battery swap module comprises a battery compartment configured to store at least one battery, the at least one battery being configured to be installed in an electric vehicle, and a battery transportation device. The battery swap module is configured to operate in a battery swap mode and a maintenance mode. In the battery swap mode, the battery compartment is configured to be arranged in a space provided vertically below a battery swap level, so that the battery compartment is located vertically below an electric vehicle located on the battery swap level. Furthermore, in the battery swap mode, the battery transportation device is configured to dismount at least one discharged battery from an electric vehicle located on the battery swap level, transport the at least one discharged battery from the electric vehicle to the battery compartment, to transport at least one charged battery from the battery compartment to the electric vehicle, and to mount the at least one charged battery to the electric vehicle. In the maintenance mode, the battery compartment is configured to be lifted vertically above the battery swap level by a lifting device.

The battery swap mode refers to an operating mode of the battery swap module, in which the battery swap module performs a battery swap operation on a vehicle located on the battery swap level. The maintenance mode refers to an operating mode of the battery swap module, in which at least the battery compartment is accessible for service personnel for maintenance tasks on the batteries and/or the battery compartment. Furthermore, in the maintenance mode, the battery compartment may be accessible for inserting, removing or replacing one or more batteries stored in the battery compartment.

Preferably, in the battery swap mode, the battery compartment is not accessible for service personnel.

The battery swap module may refer to a part of the battery swap station. Preferably, the battery swap module is structured as a modular part enclosing all components of the battery swap module, e.g., a housing enclosing the battery compartment and the battery transportation device.

The battery swap level may refer to a defined level configured so that an electric vehicle can be parked on the battery swap level for performing a battery swap operation. In the battery swap mode, the battery swap station defines a battery swap area configured to receive the electric vehicle for the battery swap operation. The battery swap area may comprise devices, e.g. wheel guides, to ensure a correct positioning of the electric vehicle above the space comprising the battery swap module.

Preferably, in the battery swap mode the upper surface of the battery swap module may be at the battery swap level. Preferably, in the battery swap mode, the electric vehicle may be located on the upper surface of the battery swap module. In other words, the upper surface of the battery swap module may define the battery swap area in the battery swap mode.

With respect to the expressions "charged batteries" and "depleted batteries" it is noted that the purpose of a battery swap station is generally to replace a depleted battery by a charged battery. However, of course the battery transportation device may also be configured to dismount a battery from the electric vehicle that is not depleted. Similarly, the battery transportation device may also be configured to transport a battery from the battery compartment to the electric vehicle that is not completely charged.

Preferably, the battery compartment may refer to a space or section within the battery swap module, which is structured to store one or more batteries of the electric vehicle. However, the battery compartment may also be a part that is separate and/or separable from the other components of the battery swap module. The battery compartment may comprise structures to hold and/or support the one or more batteries stored in the battery compartment.

The battery transportation device may refer to a device or devices configured to dismount the battery from the electric vehicle in the battery swap mode when the electric vehicle is located on the battery swap level, transport the at least one battery which has been dismounted from the electric vehicle to the battery compartment, transport a charged battery from the battery compartment to the electric vehicle, and mount the at least one charged battery to the electric vehicle. These operations may be performed by one single device. Alternatively, the battery transportation device may comprise two or more sub-devices. For example, the battery transportation device may comprise a first sub-device configured to mount and dismount the battery from the electric vehicle, and a second sub-device configured to transport the battery from the electric vehicle to the battery compartment and vice versa. Furthermore, the first and second sub-devices may be configured to hand over the battery from the first device to the second device and vice versa.

The battery transportation device preferably comprises one or more of the following sub-devices:
- A mobile stacking device, which may be configured to place an empty battery into and/or take out a charged battery from the battery compartment. in the battery cabinet, it can take out the fully charged battery and put back the empty battery.
- A transfer device, which may be configured to transfer a battery from the mobile stacking device and a transfer roller.
- A transfer roller, which may be configured to transfer the battery between the transfer device and a rail guided vehicle.
- A rail guided vehicle (RGV), which may be located beneath battery swap level. The RGV may be configured to control the movement of the power swap mechanism. For example, the RGV may comprise a lock and/or unlock gun, which may be installed on the RGV and may be configured to lock or unlock a battery bolt. In use, the vehicle may be parked on the RGV which then positions the car perfectly in place to execute the battery swap. The RGV may be configured to move up and down, mainly to unlock the battery. Further, the RGV may be configured to move forward and backward. Further, the RGV may be adaptable to to different wheelbase vehicles. Further, the RGV may comprise body locating pins configured to locate the vehicle position. Further, the RGV may comprise battery locating pins configured to locate the battery position.

In this way, the battery compartment is configured to be located in a space or cavity below the ground level in a battery swap mode. Furthermore, it is configured to be lifted above the ground level in a maintenance mode.

Thus, on the one hand, the battery swap station comprising this battery swap module is configured to occupy less space above ground level. As such, the battery swap station may comply with stricter building regulations, in particular in urban areas. Furthermore, since the battery compartment is configured to be located in a space below the battery swap level, the battery compartment may be protected from weather, other environmental conditions Furthermore, since the entire battery compartment can be lifted above the battery swap level, the battery compartment can be made accessible for maintenance. In this way, it is not necessary to go underground at any time to maintain and/or repair the one or more batteries and/or the battery compartment.

Preferably, in the battery swap mode, the battery swap module including the battery compartment and the battery transportation device is configured to be arranged in the space provided vertically below the battery swap level.

In this way, the entire module may be located within a space or cavity provided below ground level. This may further reduce the amount of space required by the battery swap station above ground level. Furthermore, the entire module may be protected from environmental conditions and/or noise emission may be further reduced.

Preferably, in the maintenance mode, the battery swap module including the battery compartment and the battery transportation device is configured to be lifted above the battery swap level.

Thus, the entire battery swap module may be lifted out of the space or cavity above the surface, e.g., for maintenance of the battery compartment, the battery transportation device and/or other components of the battery swap module. In other words, the battery swap module is arranged in the space so that the electric vehicle is located vertically above the battery swap module in the battery swap mode, when the electric vehicle is correctly positioned on the battery swap level. The battery swap module may comprise a housing enclosing the different components of the battery swap module. For example, the battery compartment and the battery transportation device may be located within the housing of the battery swap module.

Preferably, the battery transportation device comprises a rail guided vehicle.

Preferably, the battery compartment is configured to store at least 3, preferably at least 5, more preferably between 5 and 10 batteries.

In this way, the battery swap module is configured to perform multiple battery swap operations successively within a relatively short period of time.

Preferably, the battery swap module is configured to charge at least one battery located in the battery compartment.

In this way, the battery swap module can recharge the depleted batteries and can use them for a subsequent swapping operation.

Preferably, the electric vehicle is an electric passenger automobile.

Preferably, the at least one battery is a traction battery.

Preferably, the battery swap level is at ground level.

In other words, the battery swap module is configured to be below ground level.

Preferably, the lifting device comprises a hydraulic lifting device.

Preferably, the battery swap module comprises the lifting device.

Preferably, the battery compartment is sealed to prevent ingress of water in the battery swap mode. In particular, the battery compartment may be configured to prevent that rain water or meltwater reaches the one or more batteries stored in the battery compartment.

The invention further relates to a battery swap station comprising the battery swap module as described herein, the battery swap module being arranged in the space in the battery swap mode, and comprising the lifting device configured to lift at least the battery compartment vertically above the battery swap level in the maintenance mode.

The invention further relates to a battery swap station comprising the battery swap module including the lifting device, the battery swap module being arranged in the space in the battery swap mode.

Preferably, the lifting device is arranged in the space vertically below the battery swap level.

Preferably, the lifting device is arranged vertically below the battery swap module.

Preferably, the battery swap station further comprising roofing arranged over the battery swap level and the space to protect the battery swap module from weather conditions, preferably from rain.

The roofing further protects the battery swap station and/or the battery swap module from weather conditions, in particular from rain.

Preferably, the roofing comprises solar cells, the battery swap station is configured to use electric power generated with the solar cells to charge the at least one battery stored in the battery compartment.

For example, a waterproof commercial aluminium solar carport can be installed to prevent the water from accessing the battery swap module. In order to save the costs, the solar carport can cover only the battery swap level and/or the battery swap area, which is located above and/or on the upper surface of the battery swap module.

In this way, the battery swap station may be less dependent on an external power supply.

The invention further relates to a method of operating a battery swap station, preferably a battery swap station as described herein. The method comprises a battery swap mode comprising dismounting at least one discharged battery from an electric vehicle located on a battery swap level, transporting the at least one discharged battery from the electric vehicle to a battery compartment, the battery compartment being arranged in a space provided vertically below the battery swap level, transporting at least one charged battery from the battery compartment to the electric vehicle, and mounting the at least one charged battery to the electric vehicle. The method further comprises a maintenance mode comprising lifting the battery compartment vertically above the battery swap level.

The method may also be characterized by the preferred features disclosed with respect to the battery swap module and the battery swap station.

### BRIEF DESCRIPTION OF THE DRAWING

The invention will be described in more detail with reference to the figure below. The figure discloses exemplary embodiments of the invention for illustrational purposes only. In particular, the disclosure provided by the figure is not meant to limit the scope of protection conferred by the invention.
Fig. 1 shows a battery swap station according to an exemplary embodiment.
Fig. 2 shows the battery swap station of Fig. 1 with the battery swap module lifted above the battery swap level.

### DETAILED DESCRIPTION

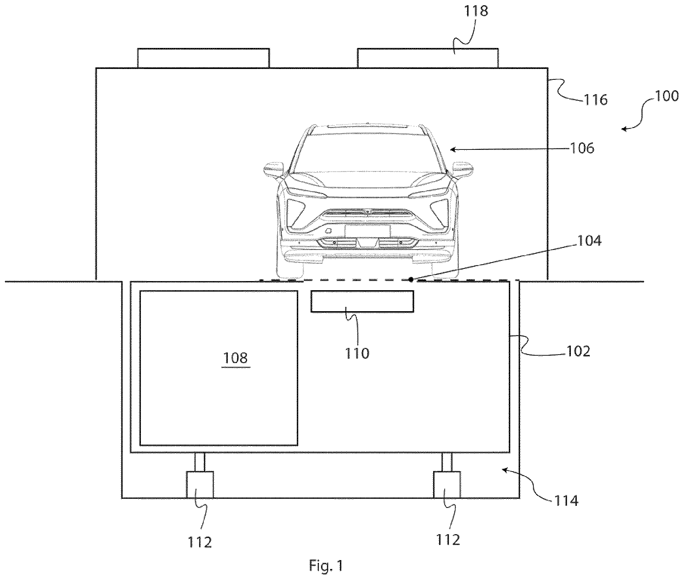

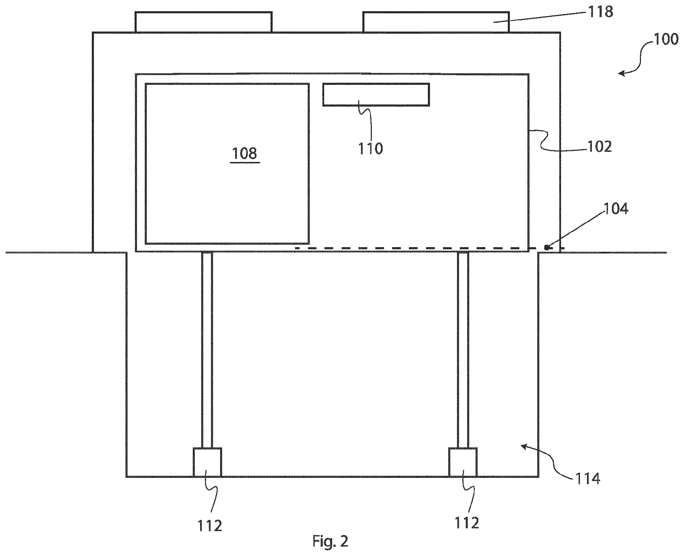

Figs. 1 and 2 show a battery swap station 100 according to an embodiment of the invention. The battery swap station 100 comprises a battery swap module 102.

Fig. 1 shows the battery swap module 102 during operation. The battery swap module 102 is located within a space 114 located below ground level 104. An electric vehicle 106, for example, an electric passenger automobile, is located on the ground level in the battery swap mode, i.e., for the battery swap operation. As such, in this embodiment the ground level 104 is the battery swap level 104.

The battery swap module 102 comprises a battery compartment 108 configured to store one or more batteries. Furthermore, the battery compartment 108 may be configured to charge the one or more batteries stored in the battery compartment 108. The battery swap module 102 further comprises a battery transport device 110, for example, a rail guided vehicle. The battery transportation device 110 is configured to dismount the battery from the electric vehicle 106, transport the battery from the electric vehicle 106 to the battery compartment 108, transport a charged battery from the battery compartment 108 to the electric vehicle 106, and mount the battery to the electric vehicle 106. Although Figs. 1 and 2 only show one battery transportation device 110 the battery transport device may comprise two or more sub-devices.

It is noted that the invention also encompasses embodiments, in which only the battery compartment 108 is located in the space 114 vertically below the battery swap level 104.

The battery swap station 100 further comprises a roofing 116 having solar cells 118. The solar cells 118 provide electric power to the battery swap module 102 to charge the one or more batteries stored in the battery compartment 108. The roofing 116 protects the battery swap module 102 from environmental conditions such as rain.

The battery swap station 100 further comprises a lifting device 112, for example a hydraulic lifting device. The lifting device 112 is configured to lift the battery swap module 102 vertically above the battery swap level 104.

Fig. 2 shows the battery swap station 100 with the battery swap module 102 in the maintenance mode, in which the battery swap module 102 is lifted vertically above the battery swap level 104 by the lifting device 112. In this position, the battery swap module 102, in particular the battery compartment 108, may be accessible for maintenance. Again, it is noted that the invention also encompasses embodiments, in which only the battery compartment 108 is lifted vertically above the battery swap level 104.

## Claims

1. Battery swap module (102) for a battery swap station (100) for electric vehicles (106), the battery swap module (102) comprising:
a battery compartment (108) configured to store at least one battery, the at least one battery being configured to be installed in an electric vehicle (106); and
a battery transportation device (110),
wherein the battery swap module is configured to operate in a battery swap mode and a maintenance mode;
wherein, in the battery swap mode, the battery compartment (108) is configured to be arranged in a space (114) provided vertically below a battery swap level (104), so that the battery compartment (108) is located vertically below an electric vehicle (106) provided on the battery swap level (104);
wherein, in the battery swap mode, the battery transportation device (110) is configured to dismount at least one discharged battery from an electric vehicle (106) located on the battery swap level (104), transport the at least one discharged battery from the electric vehicle (106) to the battery compartment (108), to transport at least one charged battery from the battery compartment (108) to the electric vehicle (106), and to mount the at least one charged battery to the electric vehicle (106); and
wherein, in the maintenance mode, the battery compartment (108) is configured to be lifted vertically above the battery swap level (104) by a lifting device (112).

2. The battery swap module (102) of claim 1,
wherein, in the battery swap mode, the battery swap module (102) including the battery compartment (108) and the battery transportation device (110) is configured to be arranged in the space (114) provided vertically below the battery swap level (104); and/or
wherein, in the maintenance mode, the battery swap module (102) including the battery compartment (108) and the battery transportation device (110) is configured to be lifted above the battery swap level (104).

3. The battery swap module (102) of claim 1 or 2,
wherein the battery transportation device (110) comprises a rail guided vehicle.

4. The battery swap module (102) of any one of the preceding claims, wherein the battery compartment (108) is configured to store at least 3, preferably at least 5, more preferably between 5 and 10 batteries.

5. The battery swap module (102) of any one of the preceding claims, wherein the battery swap module (102) is configured to charge at least one battery located in the battery compartment (108).

6. The battery swap module (102) of any one of the preceding claims, wherein the electric vehicle (106) is an electric passenger automobile.

7. The battery swap module (102) of any one of the preceding claims, wherein the at least one battery is a traction battery.

8. The battery swap module (102) of any one of the preceding claims, wherein the battery swap level is at ground level.

9. The battery swap module (102) of any one of the preceding claims, wherein the lifting device (112) comprises a hydraulic lifting device.

10. The battery swap module (102) of any one of the preceding claims, wherein the battery swap module (102) comprises the lifting device (112).

11. A battery swap station (100) comprising the battery swap module (102) according to any one of claims 1 to 9, the battery swap module (102) being arranged in the space (114) in the battery swap mode, and comprising the lifting device (112) configured to lift at least the battery compartment (108) vertically above the battery swap level (104) in the maintenance mode.

12. A battery swap station (100) comprising the battery swap module (102) according to claim 10, the battery swap module (102) being arranged in the space (114) in the battery swap mode.

13. The battery swap station (100) of claim 11, wherein the lifting device (112) is arranged in the space (114) vertically below the battery swap level (104).

14. The battery swap station (100) of any one of claims 11 to 13, further comprising roofing (116) arranged over the battery swap level (104) and the space (114) to protect the battery swap module (102) from weather conditions, preferably from rain; wherein, preferably, the roofing (116) comprises solar cells (118), the battery swap station (100) is configured to use electric power generated with the solar cells (118) to charge the at least one battery stored in the battery compartment (108).

15. Method of operating a battery swap station, preferably a battery swap station according to any one of claims 10 to 14, comprising:
a battery swap mode comprising:
• dismounting at least one discharged battery from an electric vehicle (106) located on a battery swap level (104);
• transporting the at least one discharged battery from the electric vehicle (106) to a battery compartment (108), the battery compartment (108) being arranged in a space (114) provided vertically below the battery swap level (104);
• transporting at least one charged battery from the battery compartment (108) to the electric vehicle (106); and
• mounting the at least one charged battery to the electric vehicle (106);
a maintenance mode comprising:
• lifting the battery compartment (108) vertically above the battery swap level (104).
